(19) Europäisches Patentamt
European Patent Office
Office européen des brevets

(11) EP 4 675 489 A1

(12) **EUROPEAN PATENT APPLICATION**

(43) Date of publication:
07.01.2026 Bulletin 2026/02

(21) Application number: 25186707.3

(22) Date of filing: 01.07.2025

(51) International Patent Classification (IPC):
$G06F\ 30/25^{(2020.01)}$    $G06F\ 30/28^{(2020.01)}$
$G06F\ 113/08^{(2020.01)}$    $G06F\ 111/10^{(2020.01)}$
$G06F\ 119/08^{(2020.01)}$

(52) Cooperative Patent Classification (CPC):
G06F 30/25; G06F 30/28; G06F 2111/10;
G06F 2113/08; G06F 2119/08

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 03.07.2024 US 202463667208 P
24.06.2025 US 202519247321

(71) Applicant: DASSAULT SYSTEMES AMERICAS
CORP.
Waltham, MA 02451 (US)

(72) Inventors:
• OTOMO, Hiroshi
Waltham, MA, 02451 (US)
• SUN, Chenghai
Waltham, MA, 02451 (US)
• ZHANG, Raoyang
Waltham, MA, 02451 (US)

(74) Representative: Fish & Richardson P.C.
Highlight Business Towers
Mies-van-der-Rohe-Straße 8
80807 München (DE)

(54) **COMPUTER SYSTEM FOR DIGITALLY SIMULATING PSEUDO-INCOMPRESSIBLE FLUID FLOW IN A COMPUTER AIDED DESIGN MODEL**

(57)    Systems and methods for digitally simulating a fluid flow in a three-dimensional computer-aided design (CAD) model of a simulation space include digitally simulating movement of one or more digital particles representing the fluid from one or more first voxels in a mesh to one or more second voxels in the mesh, performing one or more interaction operations on the one or more digital particles at the one or more second voxels to determine a distribution of the one or more digital particles. A first quantity represented by the distribution of the one or more digital particles is based on a temperature and a pressure at the one or more second voxels and a reference fluid density. A second quantity represented by the distribution of the one or more digital particles is based on the reference fluid density, velocities of the one or more digital particles, and a mean fluid velocity.

FIG. 1

EP 4 675 489 A1

**Description**

**CROSS-REFERENCE TO RELATED APPLICATIONS**

This application claims the benefit under 35 U.S.C. § 119(e) of priority to U.S. Provisional Application No. 63/667,208, filed on July 3, 2024, the contents of which are hereby incorporated by reference.

**BACKGROUND**

This description relates to simulating physical processes, e.g., fluid flow.

Fluid flow can be simulated by generating discretized solutions of the Navier-Stokes differential equations by performing high-precision floating point arithmetic operations at each of many discrete spatial locations on variables representing the macroscopic physical quantities (e.g., density, temperature, flow velocity). Another approach replaces the differential equations with what is generally known as lattice gas (or cellular) automata, in which the macroscopic-level simulation provided by solving the Navier-Stokes equations is replaced by a microscopic-level model that performs operations on particles moving between sites on a lattice.

**SUMMARY**

This disclosure describes an approach for improving the accuracy of digital simulations of fluid flows. The Lattice Boltzmann Method (LBM) is one approach for digitally simulating fluid flow. The standard LBM is based on a compressible fluid assumption that causes errors in the results of the simulation due to effects of truncation errors when simulating certain types of fluid flows, for example, incompressible fluid flows or multiphase fluid flows with high density ratios. The approach of this disclosure reduces truncation errors that cause unphysical results in the digital simulation. Removal of undesirable truncation errors can also improve the stability of the digital simulation.

In an example implementation, a computer system for digitally simulating a fluid flow in a three-dimensional computer-aided design (CAD) model of a simulation space includes one or more processors; and a memory including: a mesh preparation engine for generating and storing a digital representation of a simulation space based on a digital three-dimensional CAD model, the digital representation including a mesh comprising a plurality of voxels; and a simulation engine for reading, from the mesh preparation engine, the digital representation of the mesh in the simulation space. The simulation engine stores instructions for digitally simulating a fluid flow. The instructions, when executed by the one or more processors, cause the one or more processors to perform operations including reading, from the mesh preparation engine, the digital representation of the mesh in the simulation space; digitally simulating movement of one or more digital particles representing the fluid from one or more first voxels to one or more second voxels in the digital representation of the mesh. The one or more digital particles are associated with an energy state and a lattice velocity. The operations include performing one or more interaction operations on the one or more digital particles at the one or more second voxels to determine a distribution of the one or more digital particles. A first quantity represented by the distribution of the one or more digital particles at the one or more second voxels is based on a temperature and a pressure at the one or more second voxels and a reference fluid density; and a second quantity represented by the distribution of the one or more digital particles is based on the reference fluid density, velocities of the one or more digital particles, and a mean fluid velocity.

In an aspect combinable with the example implementation, the first quantity is represented by a zeroth moment of the distribution of the one or more digital particles, and where the zeroth moment is proportional to the pressure without a local density dependence.

In another aspect combinable with one, some, or all of the previous aspects, the second quantity is represented by a first moment of the distribution of the one or more digital particles, and where the first moment is proportional to the mean fluid velocity without a local density dependence.

In another aspect combinable with one, some, or all of the previous aspects, the first quantity and the second quantity improve an accuracy of the digitally simulating the fluid flow by reducing truncation error by improving Galilean invariance of the digital simulation relative to a simulation that does not include a reference fluid density in the first quantity and the second quantity.

In another aspect combinable with one, some, or all of the previous aspects, the fluid flow is a multi-phase fluid flow with a high density ratio between phases of the fluid flow.

In another aspect combinable with one, some, or all of the previous aspects, the instructions include storing in the memory results of the digital simulation of the fluid flow, the digital simulation being based on digitally simulating movement of the one or more digital particles from one or more first voxels to one or more second voxels in the digital representation of the mesh and performing interaction operations on the one or more digital particles at the one or more second voxels to determine the distribution of the one or more digital particles.

In another aspect combinable with one, some, or all of the previous aspects, the digitally simulating the fluid flow using the first quantity improves independence from an absolute pressure value of the fluid flow relative to a digital simulation using a first quantity that is not based on a pressure and a reference fluid density.

In another example implementation, a method for digitally simulating a fluid flow in a three-dimensional computer-aided design (CAD) model of a simulation space includes reading, by a data processing system, a digital representation of a simulation space based on a digital three-dimensional CAD model, the digital representation comprising a mesh including a plurality of voxels; digitally simulating, by the data processing system, movement of one or more digital particles representing the fluid from one or more first voxels to one or more second voxels in the digital representation of the mesh. The one or more digital particles are associated with an energy state and a lattice velocity. The method includes performing, by the data processing system, one or more interaction operations on the one or more digital particles at the one or more second voxels to determine a distribution of the one or more digital particles. A first quantity represented by the distribution of the one or more digital particles at the one or more second voxels is based on a temperature and a pressure at the one or more second voxels and a reference fluid density; and a second quantity represented by the distribution of the one or more digital particles is based on the reference fluid density, velocities of the one or more digital particles, and a mean fluid velocity.

In an aspect combinable with the example implementation, the first quantity is represented by a zeroth moment of the distribution of the one or more digital particles, and where the zeroth moment is proportional to the pressure without a local density dependence.

In another aspect combinable with one, some, or all of the previous aspects, the second quantity is represented by a first moment of the distribution of the one or more digital particles, and where the first moment is proportional to the mean fluid velocity without a local density dependence.

In another aspect combinable with one, some, or all of the previous aspects, the first quantity and the second quantity improve an accuracy of the digitally simulating the fluid flow by reducing truncation error by improving Galilean invariance of the digital simulation relative to a simulation that does not include a reference fluid density in the first quantity and the second quantity.

In another aspect combinable with one, some, or all of the previous aspects, the fluid flow is a multi-phase fluid flow with a high density ratio between phases of the fluid flow.

Another aspect combinable with one, some, or all of the previous aspects includes storing, by the data processing system, in a hardware storage device results of the digital simulation of the fluid flow, the digital simulation being based on digitally simulating movement of the one or more digital particles from one or more first voxels to one or more second voxels in the digital representation of the mesh and performing interaction operations on the one or more digital particles at the one or more second voxels to determine the distribution of the one or more digital particles.

In another aspect combinable with one, some, or all of the previous aspects, the digitally simulating the fluid flow using the first quantity improves independence from an absolute pressure value of the fluid flow relative to a digital simulation using a first quantity that is not based on a pressure and a reference fluid density.

In another example implementation, one or more non-transitory machine-readable storage devices store instructions for digitally simulating a fluid flow in a three-dimensional computer-aided design (CAD) model of a simulation space. The instructions are executable by one or more processors, to cause performance of operations including reading a digital representation of a simulation space based on a digital three-dimensional CAD model. The digital representation includes a mesh including a plurality of voxels. The operations include digitally simulating movement of one or more digital particles representing the fluid from one or more first voxels to one or more second voxels in the digital representation of the mesh. The one or more digital particles are associated with an energy state and a lattice velocity. The operations include performing one or more interaction operations on the one or more digital particles at the one or more second voxels to determine a distribution of the one or more digital particles. A first quantity represented by the distribution of the one or more digital particles at the one or more second voxels is based on a temperature and a pressure at the one or more second voxels and a reference fluid density; and a second quantity represented by the distribution of the one or more digital particles is based on the reference fluid density, velocities of the one or more digital particles, and a mean fluid velocity.

In an aspect combinable with the example implementation, the first quantity is represented by a zeroth moment of the distribution of the one or more digital particles, and wherein the zeroth moment is proportional to the pressure without a local density dependence.

In another aspect combinable with one, some, or all of the previous aspects, the second quantity is represented by a first moment of the distribution of the one or more digital particles, and where the first moment is proportional to the mean fluid velocity without a local density dependence.

In another aspect combinable with one, some, or all of the previous aspects, where the fluid flow is a multi-phase fluid flow with a high density ratio between phases of the fluid flow.

In another aspect combinable with one, some, or all of the previous aspects, the instructions include storing in a hardware storage device results of the digital simulation of the fluid flow, the digital simulation being based on digitally simulating movement of the one or more digital particles from one or more first voxels to one or more second voxels in the digital representation of the mesh and performing interaction operations on the one or more digital particles at the one or more second voxels to determine the distribution of the one or more digital particles.

In another aspect combinable with one, some, or all of the previous aspects, the digitally simulating the fluid flow using the first quantity improves independence from an absolute pressure value of the fluid flow relative to a digital simulation using a first quantity that is not based on a pressure and a reference fluid density, and the first quantity and the second quantity improve an accuracy of the digitally simulating the fluid flow by reducing truncation error by improving Galilean invariance of the digital simulation relative to a simulation that does not include a reference fluid density in the first quantity and the second quantity.

One or more of the above aspects may provide one or more of the advantages disclosed herein. This approach can reduce computational resources required to digitally simulate fluid flows by removing undesirable truncation errors from the computations. Removal of the undesirable truncation errors also improves stability of the digital simulation. The approach of this disclosure can implement the LBM for solving pseudo-incompressible fluid flows with improved Galilean invariance and absolute pressure value dependence.

Other features and advantages of this approach will be apparent from the following detailed description and from the claims.

## BRIEF DESCRIPTION OF THE DRAWINGS

FIG. 1 depicts a system for simulation of fluid flows, which includes a novel surface dynamics conversion.

FIG. 2 depicts a flow chart showing operations for formulation of a Lattice Boltzmann Model simulation.

FIGS. 3 and 4 illustrate velocity components of two LBMs represented in Euclidean space (prior art).

FIG. 5 is a flow chart of a procedure followed by a physical process simulation system using corrected computer-aided-design (CAD) drawings.

FIG. 6 is a perspective view of a microblock (prior art).

FIGS. 7A - 7B are illustrations of lattice structures used by the system of FIG. 1 (prior art).

FIGS. 8 and 9 each illustrate variable resolution techniques (prior art).

FIG. 10 illustrates movement of particles (prior art).

FIG. 11 illustrates regions affected by a facet of a surface (prior art).

FIG. 12 illustrates movement of particles from a surface to a surface (prior art).

FIG. 13 is a flow chart of a procedure for performing surface dynamics.

FIGS. 14A, 14B, 15A, and 15B illustrate visualizations of density profiles resulting from digital simulations of static and dynamic droplets.

The details of one or more embodiments of the invention are set forth in the accompanying drawings and the description below. Other features, objects, and advantages of the invention are apparent from the description and drawings, and from the claims.

## DESCRIPTION

This disclosure describes an approach for digitally simulating a fluid flow, for example, a multiphase fluid flow with a high density ratio or a pseudo-incompressible fluid flow. This approach can improve the stability and accuracy of the fluid flow simulation be removing effects caused by truncation errors. This approach can be implemented on a data processing system. The data processing system can obtain a mesh that is a digital representation of a simulation space based on a 3D CAD model. The mesh includes a plurality of voxels. The data processing system can digitally simulate one or more digital particles representing the fluid from one or more first voxels to one or more second voxels in the mesh. The data processing system can perform one or more interaction operations on the digital particles at the one or more second voxels to determine a distribution of the one or more digital particles. A first quantity (e.g., a fluid density) represented by the distribution of the one or more digital particles can be based on a temperature and pressure at the one or more second voxels and a reference fluid density. A second quantity (e.g., a momentum density) can be represented by the distribution of particles based on the reference fluid density, velocities of the one or more digital particles, and a mean fluid velocity.

One method for simulating fluid flows is the so-called Lattice Boltzmann Model (LBM). In an LBM-based physical process simulation system, fluid flow is represented by distribution function values, evaluated at a set of discrete velocities using the well-known Lattice Boltzmann equation that describes the time-evolution of the distribution function. The distribution function involves two processes, a streaming process and a collision process.

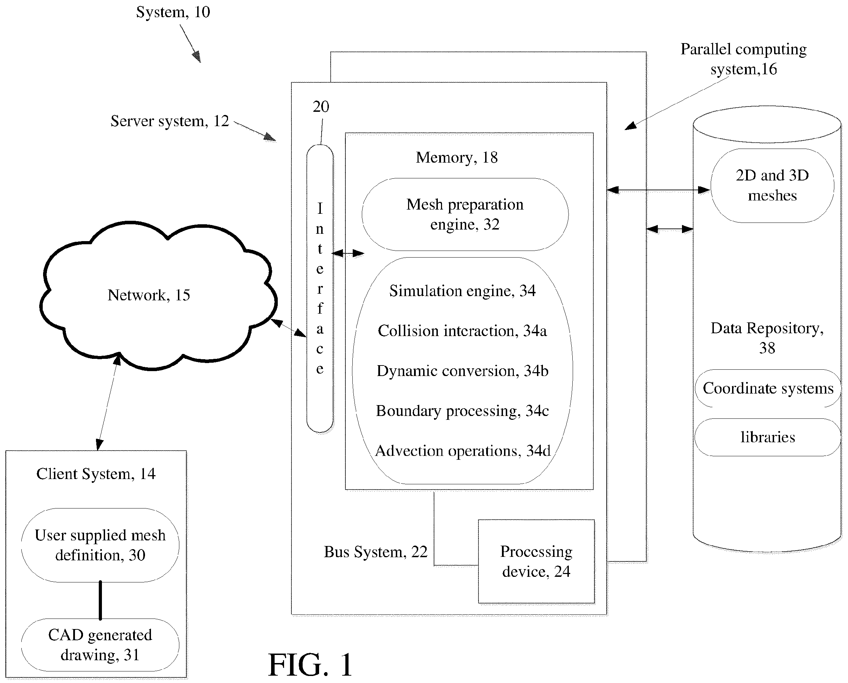

FIG. 1 illustrates a schematic of an example data processing system 10 that executes a Lattice Boltzmann (LB) based simulation in a digital representation of the simulation space. The system 10 in this implementation is based on a client-server or cloud-based architecture and includes a server system 12 implemented as a massively parallel computing system 16 (stand alone or cloud-based) and a client system 14 coupled via a network 15. The server system 12 includes memory 18, a bus system 22, interfaces 20 (e.g., user interfaces/network interfaces/display or monitor interfaces, etc.) and a processing device 24. In memory 18 are a mesh preparation engine 32 and a simulation engine 34.

While FIG. 1 shows mesh preparation engine 32 in memory 18, the mesh preparation engine can be a third-party application that is executed on a different system than server 12. Whether mesh preparation engine 32 executes in memory 18 or is executed on a different system than server 12, mesh preparation engine 32 receives a user-supplied mesh definition 30 based on CAD generated drawings 31 and then prepares a mesh and sends (and/or stores) the prepared mesh to simulation engine 34.

Simulation engine 34 includes collision interaction module 34a, which includes surface dynamics conversion 34b, boundary processing module 34c, and advection operations 34d. System 10 accesses data repository 38, which stores 2D and/or 3D meshes (Cartesian and/or curvilinear), coordinate systems, and libraries. For example, system 10 writes data to and reads data from data repository 38, including, e.g., data representing a digital simulation of movement of one or more digital particles representing a fluid from one or more first voxels to one or more second voxels in a digital representation of a mesh; data representing performance of one or more interaction operations on the one or more digital particles at the one or more second voxels to determine a distribution of the one or more digital particles; data representing the distribution of the one or more digital particles; data representing a first density represented by the distribution of the one or more digital particles at the one or more second voxels based on a temperature and a pressure at the one or more second voxels and a reference fluid density; and data representing a second density represented by the distribution of the one or more digital particles based on the reference fluid density, velocities of the one or more digital particles, and a mean fluid velocity, each of which may be read from and/or written to data repository 38 - as appropriate.

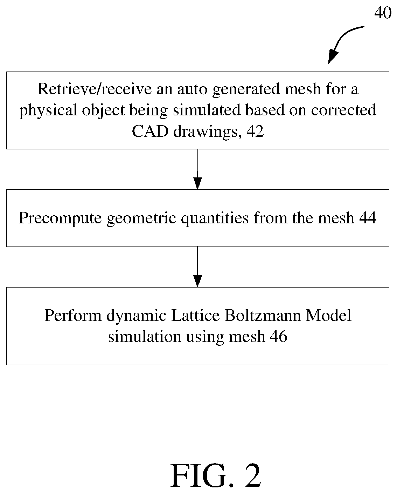

Referring to FIG. 2, a process 40 for simulating fluid flow about a representation of a physical object is shown. In the example that will be discussed herein, the physical object is an airfoil. The use of an airfoil is merely illustrative however, as the physical object can be of any shape and, in particular, can have planar and/or curved surface(s). Process 40 receives 42, e.g., from client system 14 or retrieves from data repository 38, a mesh (or grid) for the physical object being simulated. In other embodiments, either an external system or the server 12 based on user input, generates the mesh for the physical object being simulated. The process precomputes 44 geometric quantities from the retrieved mesh and performs a dynamic LBM simulation 46 using the precomputed geometric quantities corresponding to the retrieved mesh. Th LBM simulation includes the simulation 46 of the evolution of particle distributions that includes the surface dynamics conversion, boundary modeling, and advection of particles to a next cell or voxel in the LBM mesh.

Detailed Example

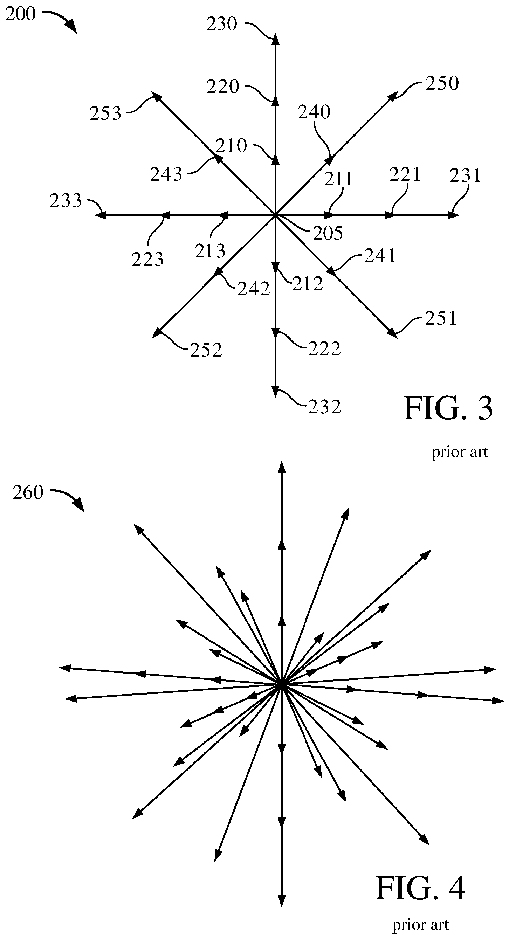

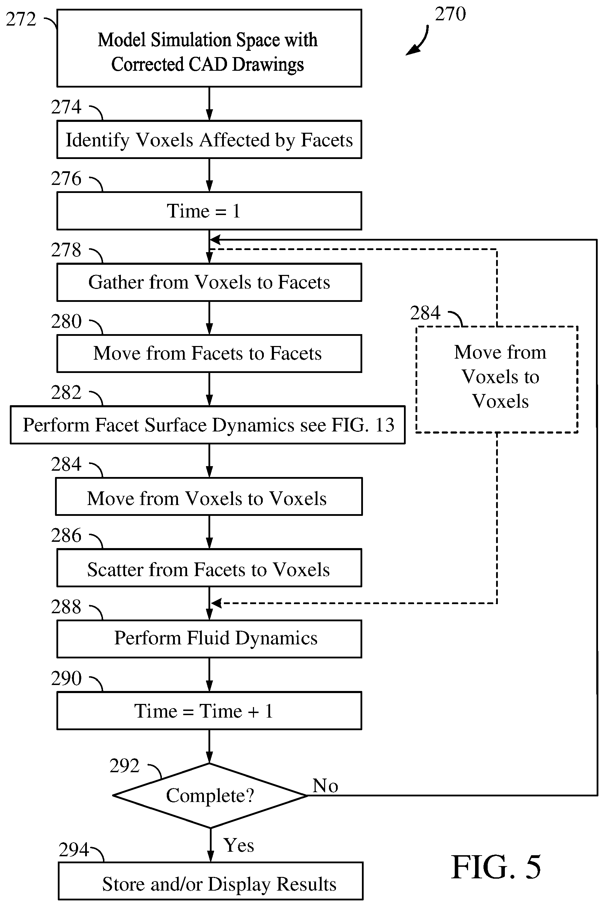

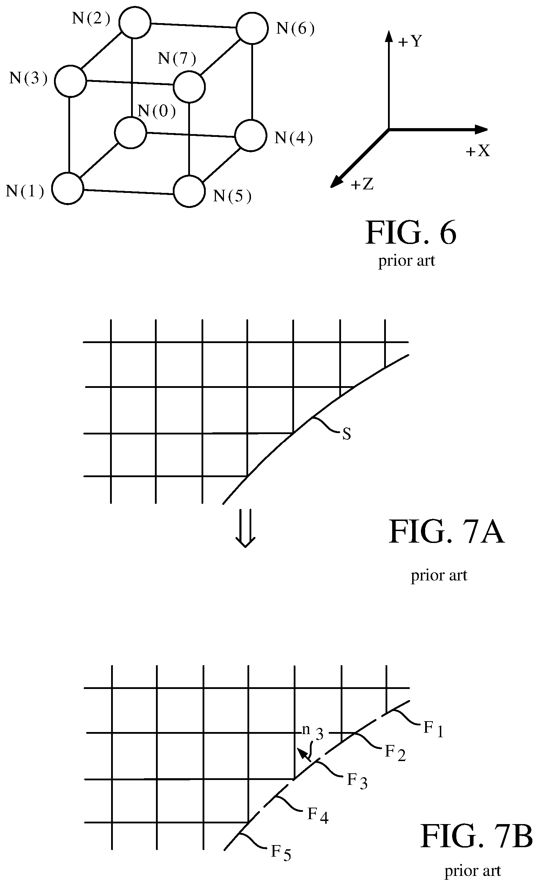

In the procedure discussed in FIG. 5 below, a flow simulation process is described using CAD drawings with identified void space to configure a simulation space. In FIGS. 3 and 4 that precede and FIGS. 6, 7A, 7B, 8, 9, 10, 11 and 12 are labeled as prior art because these figures appear in U.S. Patent 5,848,260 (the '260 patent) or U.S. Patent 11,847,391 (the '391 patent), both of which are hereby incorporated in their entirety.

However, the figures as they appear in the above patent do not take into consideration any modifications that would be made to a flow simulation using Galilean invariance and absolute pressure value independence because that process described herein is not described in the above referenced patents.

**Model Simulation Space**

In an LBM-based physical process simulation system, fluid flow is represented by distribution function values evaluated at a set of discrete velocities. The dynamics of the distribution function is governed by the Lattice Boltzmann equation (LBE), which relates the change of the distribution due to the so-called "streaming process" to changes in the distribution function due to the "collision process." The streaming process is when a pocket of fluid starts out at a mesh location, and then moves along one of the plural velocity vectors to the next mesh location. At that point, the "collision factor," i.e., the effect of nearby pockets of fluid on the starting pocket of fluid, is calculated. The fluid can only move to another mesh location, so the proper choice of the velocity vectors is necessary so that all of the components of all of the velocities are multiples of a common speed. The collision process uses a "collision operator" to represent the change of the distribution function due to the collisions among the pockets of fluids. The particular form of the collision operator is of the Bhatnagar, Gross and Krook (BGK) operator. The collision operator forces the distribution function to go to prescribed values.

The BGK operator is constructed according to the physical argument that, no matter what the details of the collisions, the distribution function approaches a well-defined local equilibrium via collisions. according to a characteristic relaxation time to reach equilibrium via collisions. Dealing with particles (e.g., atoms or molecules), the relaxation time is typically taken as a constant.

From this simulation, conventional fluid variables, such as mass and fluid velocity, are obtained based on simple summations of products of the distribution function. Due to symmetry considerations, the set of velocity values are selected in such a way that they form certain lattice structures when spanned in the configuration space. The dynamics of such discrete systems obey the LBE, where the collision operator usually takes the BGK form as described above. By proper choice of the equilibrium distribution forms, it can be theoretically shown that the Lattice Boltzmann equation gives rise to correct hydrodynamics and thermo-hydrodynamics. That is, the hydrodynamic moments derived from the distribution function obey the Navier-Stokes equations in the macroscopic limit.

The LBM is a kinetic-based method for simulating fluid flow based on the compressible fluid assumption and leads to the compressible Navier-Stokes (or Stokes) equation asymptotically. The correspondence can be derived using the Taylor expansion or the Chapman-Enskog expansion of the BGK-Boltzmann equation. The expansion for the first moment of the BGK-Boltzmann equation yields the partial differential (macroscopic) equations such as

$$\frac{\partial \rho u}{\partial t} = A_1 \frac{\partial \rho}{\partial x} + A_2 \frac{\partial^2 \rho}{\partial x^2} + A_3 \frac{\partial^3 \rho}{\partial x^3} + \cdots B_1 \frac{\partial \rho u}{\partial x} + B_2 \frac{\partial^2 \rho u}{\partial x^2} + B_3 \frac{\partial^3 \rho u}{\partial x^3} + \cdots$$

where $A$ and $B$ are the expansion factors. Once these factors are properly set, the compressible Stokes equation can be derived as,

$$\frac{\partial \rho u}{\partial t} = T \frac{\partial \rho}{\partial x} + v \frac{\partial^2 \rho u}{\partial x^2} + A_2 \frac{\partial^2 \rho}{\partial x^2} + B_3 \frac{\partial^3 \rho u}{\partial x^3} + \cdots$$

where $T$ is the temperature and $v$ is the viscosity. All terms after $v \frac{\partial^2 \rho u}{\partial x^2}$ are truncation error terms. Macroscopic fluid quantities can be determined based on the distribution function $f_i$. For example, a first quantity can represent the fluid density (e.g., $\rho$), and a second quantity can represent a momentum density (e.g., $\rho u$). Here, $\rho$ and $\rho u$ can be defined from the zeroth and the first moments of the distribution function $f_i$ as,

$$\rho = \sum_i f_i \; ; \; \rho u = \sum_i f_i v_i \, ,$$

where $i$ is an index for the discrete particles' speeds and $v_i$ is the particles' speed.

Under this formulation of the moments of the distribution function, the truncation error terms have the form $B_n \frac{\partial^n \rho u}{\partial x^n}$, which includes a term of the form $B_n u \frac{\partial^n \rho}{\partial x^{n'}}$, where $n$ is any integer greater than 2. This term is not Galilean invariant and becomes more problematic when simulating multiphase flow with a high density ratio as compared to simulating compressible fluid flow. The Galilean invariant truncation error terms come from the definition of velocity with the first moment of $f_i$. To avoid these truncation error terms, the first moment of $f_i$ can be defined, under an assumption of the incompressible fluids, as

$$\sum_i f_i v_i = \rho_{ref} u,$$

where $\rho_{ref}$ is a constant reference value of the density. This formulation avoids the truncation error terms like the one mentioned above because it only creates terms like

$$B_n \frac{\partial^n u}{\partial x^n},$$

which does not affect the Galilean invariance. Specifically, with this definition and $\sum_i f_i = P/\rho T$ where $P$ is the pressure, the macroscopic equation can be derived as,

$$\rho_{ref} \frac{\partial u}{\partial t} = A_1 \frac{\partial P/\rho}{\partial x} + A_2 \frac{\partial^2 P/\rho}{\partial x^2} + A_3 \frac{\partial^3 P/\rho}{\partial x^3} + \cdots B_1 \rho_{ref} \frac{\partial u}{\partial x} + B_2 \rho_{ref} \frac{\partial^2 u}{\partial x^2} + B_3 \rho_{ref} \frac{\partial^3 u}{\partial x^3} + \cdots$$

By properly setting the expansion factors, the incompressible Stokes equation can be derived as

$$\frac{\partial u}{\partial t} = \frac{1}{\rho}\frac{\partial P}{\partial x} + \mu\frac{\partial^2 u}{\partial x^2} + \tilde{A}_2\frac{\partial^2 P/\rho}{\partial x^2} + \tilde{B}_3\frac{\partial^3 u}{\partial x^3} + \cdots,$$

where $\mu$ is the dynamics viscosity and $\tilde{A}_2$ and $\tilde{B}_3$ are the renormalized expansion factors. As a result, Galilean invariance is significantly improved with this definition of the first moment of the distribution function.

A pseudo-incompressible flow solver using the LBM, developed to mitigate problems related to compressibility, is formulated with the definition of the zeroth moment of the distribution function as,

$$\sum_i f_i = P/\rho T.$$

However, similar to the velocity field, this definition leads to the following undesirable truncation error terms in the pressure equation. Specifically, the derived macroscopic equation for the pressure field is,

$$\frac{\partial(P/\rho T)}{\partial t} = C_1\frac{\partial(P/\rho T)}{\partial x} + C_2\frac{\partial^2(P/\rho T)}{\partial x^2} + \cdots D_1\frac{\partial\rho u}{\partial x} + D_2\frac{\partial^2\rho u}{\partial x^2}\cdots.$$

By properly setting the expansion factors C and D, the pressure equation becomes

$$\frac{\partial P}{\partial t} + \rho T\frac{\partial u}{\partial x} = C_1\frac{\partial(P/\rho T)}{\partial x} + C_2\frac{\partial^2(P/\rho T)}{\partial x^2} + \cdots + D_2\frac{\partial^2\rho u}{\partial x^2}\cdots.$$

Here the truncation error terms, which are all terms in the right hand side, at the nth order, $C_n\frac{\partial^n P/\rho}{\partial x^n}$, include $C_n P\frac{\partial^n 1/\rho}{\partial x^n}$, where $C_n$ is the expansion factor at $n$th order. This term causes an absolute pressure value dependence on the dynamics, despite the incompressible-based framework.

To improve the Galilean invariance and absolute pressure-value dependence, the zeroth and first moments of the distribution function are defined as

$$\sum_i f_i = P/\rho_{ref}T \,;\; \sum_i f_i v_i = \rho_{ref}u.$$

where $\rho_{ref}$ is the reference value of the density. These are the formulations in the leading order. For higher orders, some gradient terms may be added as corrections to improve stability and/or accuracy. With the zeroth and first moments of the distribution function described in this way, the LBM is set so that the pressure equations and the incompressible Stokes (Navier-Stokes) equation are derived from the BGK-Boltzmann equation in the leading order. This definition for the zeroth and first moments of the distribution functions also enables the lattice kinetic scheme (LKS) to be easily mapped to the LBM, which can bring beneficial treatments for the stability and accuracy of LKS.

The collective values of the lattice velocities and the associated weights define the LBM. The LBM can be implemented, efficiently on scalable computer platforms and run with great robustness for time unsteady flows and complex boundary conditions.

A general discussion of an LBM-based simulation system is provided below that includes the dynamic conversion 34b to conduct fluid flow simulations. For a further explanation of LBM-based physical process simulation systems, the reader is referred to the '260 patent.

Referring to FIG. 3, a first model (2D-1) 200 is a two-dimensional model that includes 21 velocities. Of these 21 velocities, one (205) represents particles that are not moving; three sets of four velocities represent particles that are moving at either a normalized speed ($r$) (210-213), twice the normalized speed ($2r$) (220-223), or three times the normalized speed ($3r$) (230-233) in either the positive or negative direction along either the $x$ or $y$ axis of the lattice; and two sets of four velocities represent particles that are moving at the normalized speed ($r$) (240-243) or twice the normalized speed ($2r$) (250-253) relative to both of the $x$ and $y$ lattice axes.

Referring to FIG. 4, illustrated is a second model (3D-1) 260 - a three-dimensional model that includes 39 velocities, where each velocity is represented by one of the arrowheads of FIG. 4. Of these 39 velocities, one represents particles that are not moving; three sets of six velocities represent particles that are moving at either a normalized speed (r), twice the normalized speed (2r), or three times the normalized speed (3r) in either the positive or negative direction along the *x, y* or *z* axis of the lattice; eight represent particles that are moving at the normalized speed (r) relative to all three of the *x, y, z* lattice axes; and twelve represent particles that are moving at twice the normalized speed (2r) relative to two of the *x, y, z* lattice axes.

More complex models, such as a 3D-2 model, which includes 101 velocities, and a 2D-2 model which includes 37 velocities may also be used. For the three-dimensional model 3D-2, of the 101 velocities, one represents particles that are not moving (Group 1); three sets of six velocities represent particles that are moving at either a normalized speed (r), twice the normalized speed (2r), or three times the normalized speed (3r) in either the positive or negative direction along the *x, y* or *z* axis of the lattice (Groups 2, 4, and 7); three sets of eight represent particles that are moving at the normalized speed (r), twice the normalized speed (2r), or three times the normalized speed (3r) relative to all three of the *x, y, z* lattice axes (Groups 3, 8, and 10); twelve represent particles that are moving at twice the normalized speed (2r) relative to two of the *x, y, z* lattice axes (Group 6); twenty four represent particles that are moving at the normalized speed (r) and twice the normalized speed (2r) relative to two of the *x, y, z* lattice axes, and not moving relative to the remaining axis (Group 5); and twenty four represent particles that are moving at the normalized speed (r) relative to two of the *x, y, z* lattice axes and three times the normalized speed (3r) relative to the remaining axis (Group 9).

For the two-dimensional model 2D-2, of the 37 velocities, one represents particles that are not moving (Group 1); three sets of four velocities represent particles that are moving at either a normalized speed (*r*), twice the normalized speed (2*r*), or three times the normalized speed (3*r*) in either the positive or negative direction along either the *x* or *y* axis of the lattice (Groups 2, 4, and 7); two sets of four velocities represent particles that are moving at the normalized speed (*r*) or twice the normalized speed (2*r*) relative to both of the *x* and *y* lattice axes; eight velocities represent particles that are moving at the normalized speed (*r*) relative to one of the *x* and *y* lattice axes and twice the normalized speed (2*r*) relative to the other axis; and eight velocities represent particles that are moving at the normalized speed (*r*) relative to one of the *x* and *y* lattice axes and three times the normalized speed (3*r*) relative to the other axis.

The LB models described above provide a specific class of efficient and robust discrete velocity kinetic models for numerical simulations of flows in both two-and three-dimensions. A model of this kind includes a particular set of discrete velocities and weights associated with those velocities. The velocities coincide with grid points of Cartesian coordinates in velocity space which facilitates accurate and efficient implementation of discrete velocity models, particularly the kind known as the Lattice Boltzmann models. Using such models, flows can be simulated with high fidelity.

Referring to FIG. 5, a physical process simulation system that operates according to a procedure 270 to simulate a physical process such as fluid flow is described. Prior to the flow simulation, a simulation space is modeled (272) using CAD drawings as discussed above, as a collection of voxels. The simulation space is generated using a computer-aided-design (CAD) program and the gap correction processing of the CAD generated drawings. For example, a CAD program could be used to draw an air foil positioned in a wind tunnel.

The resolution of the lattice may be selected based on the Reynolds number of the system being simulated. The Reynolds number is related to the viscosity of the flow, the characteristic length of an object in the flow, and the characteristic velocity of the flow.

The characteristic length of an object represents large scale features of the object. For example, if flow around a micro-device were being simulated, the height of the micro-device might be considered to be the characteristic length. When flow around small regions of an object (e.g., the side mirror of an automobile) is of interest, the resolution of the simulation may be increased, or areas of increased resolution may be employed around the regions of interest. The dimensions of the voxels decrease as the resolution of the lattice increases.

The state space is represented as the distribution function of particles or particles, per unit volume in a given state at a lattice site denoted by a spatial vector at a given time. The number of states is determined by the number of possible velocity vectors within each energy level. The velocity vectors are integer linear speeds in a space having three dimensions: *x, y*, and *z*. The number of states is increased for multiple-species simulations. Each state represents a different velocity vector at a specific energy level (i.e., energy level zero, one or two). The velocity of each state is indicated with its "speed" in each of the three dimensions.

The energy level zero state represents stopped particles that are not moving in any dimension, i.e., the speed of the particles in each dimension is zero. Energy level one states represents particles having a $\pm 1$ speed in one of the three dimensions and a zero speed in the other two dimensions. Energy level two states represent particles having either a $\pm 1$ speed in all three dimensions, or a $\pm 2$ speed in one of the three dimensions and a zero speed in the other two dimensions.

Generating all of the possible permutations of the three energy levels gives a total of 39 possible states (one energy zero state, 6 energy one states, 8 energy three states, 6 energy four states, 12 energy eight states and 6 energy nine states.). Each voxel (i.e., each lattice site) is represented by a state vector. The state vector completely defines the status of the voxel and includes 39 entries. The 39 entries correspond to the one energy zero state, 6 energy one states, 8 energy three states, 6 energy four states, 12 energy eight states and 6 energy nine states. By using this velocity set, the system can produce Maxwell-Boltzmann statistics for an achieved equilibrium state vector.

For processing efficiency, the voxels are grouped in 2x2x2 volumes called microblocks. The microblocks are organized to permit parallel processing of the voxels and to minimize the overhead associated with the data structure.

A microblock is illustrated in FIG. 6. The voxels are represented at the corners of the microblock.

Referring to FIGS. 7A and 7B, a surface $S$ (FIG. 7A) is represented in the simulation space (FIG. 7B) as a collection of facets $F_\alpha$, where $\alpha$ is an index that enumerates a particular facet. A facet is not restricted to the voxel boundaries but is typically sized on the order of or is slightly smaller than the size of the voxels adjacent to the facet so that the facet affects a relatively small number of voxels. Properties are assigned to the facets for the purpose of implementing surface dynamics. In particular, each facet $F_\alpha$ has a unit normal ($n_\alpha$), a surface area ($A_\alpha$), a center location ($x_\alpha$), and a facet distribution function ($f_i(\alpha)$) that describes the surface dynamic properties of the facet. The total energy distribution function is treated in the same way as the flow distribution for facet and voxel interaction.

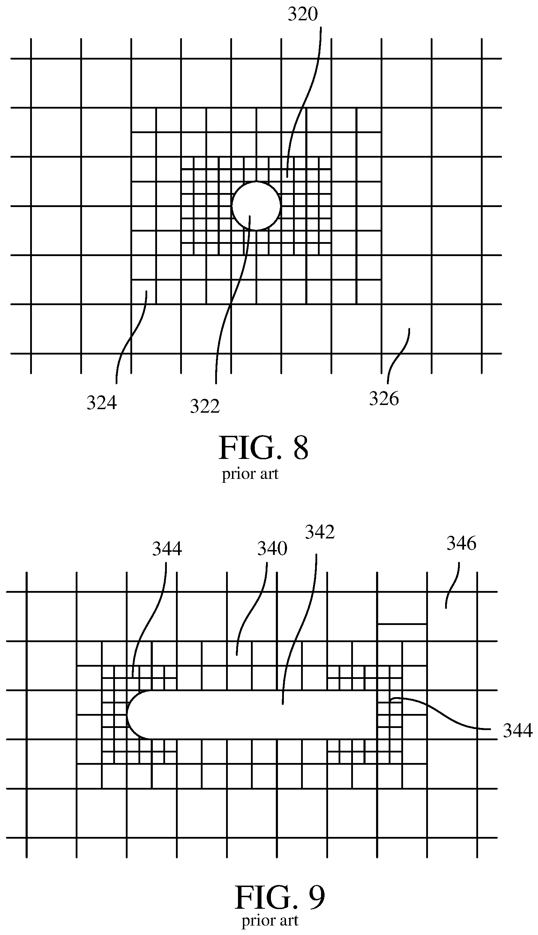

Referring to FIG. 8, different levels of resolution may be used in different regions of the simulation space to improve processing efficiency. Typically, the region 320 around an object 322 is of the most interest and is therefore simulated with the highest resolution. Because the effect of viscosity decreases with distance from the object, decreasing levels of resolution (i.e., expanded voxel volumes) are employed to simulate regions 324, 326 that are spaced at increasing distances from the object 322.

Similarly, as illustrated in FIG. 9, a lower level of resolution may be used to simulate a region 340 around less significant features of an object 342 while the highest level of resolution is used to simulate regions 344 around the most significant features (e.g., the leading and trailing surfaces) of the object 342. Outlying regions 346 are simulated using the lowest level of resolution and the largest voxels.

## C. Identify Voxels Affected By Facets

Referring again to FIG. 5, once the simulation space has been modeled (272), voxels affected by one or more facets are identified (274). Voxels may be affected by facets in a number of ways. First, a voxel that is intersected by one or more facets is affected in that the voxel has a reduced volume relative to non-intersected voxels. This occurs because a facet, and material underlying the surface represented by the facet, occupies a portion of the voxel. A fractional factor indicates the portion of the voxel that is unaffected by the facet (i.e., the portion that can be occupied by a fluid or other materials for which flow is being simulated). For non-intersected voxels the fractional factor equals one.

Voxels that interact with one or more facets by transferring particles to the facet or receiving particles from the facet are also identified as voxels affected by the facets. All voxels that are intersected by a facet will include at least one state that receives particles from the facet and at least one state that transfers particles to the facet. In most cases, additional voxels also will include such states.

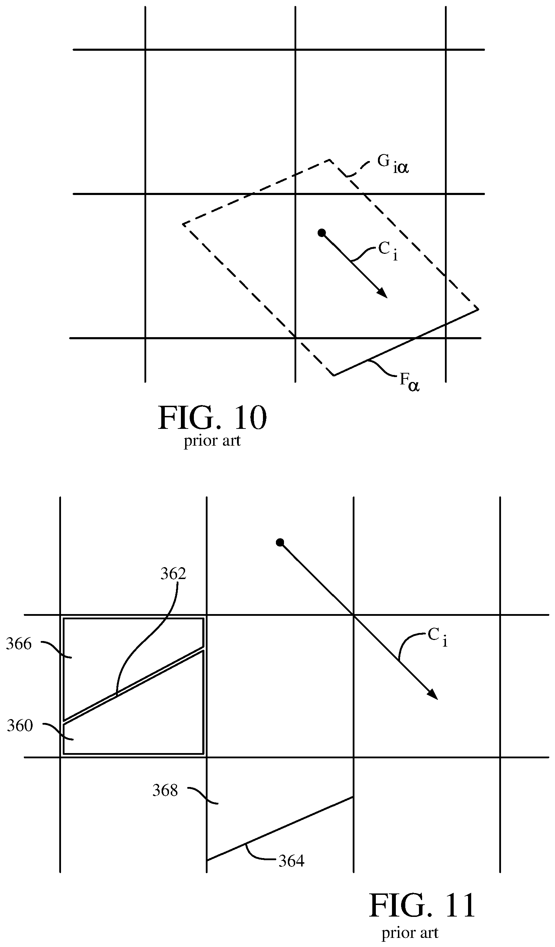

Referring to FIG. 10, for each state $i$ having a non-zero velocity vector $c_i$, a facet $F_\alpha$ receives particles from, or transfers particles to, a region defined by a parallelepiped $G_{i\alpha}$ having a height defined by the magnitude of the vector dot product of the velocity vector $c_i$ and the unit normal $n_\alpha$ of the facet and a base defined by the surface area $A_\alpha$ of the facet so that the volume $V_{i\alpha}$ of the parallelepiped $G_{i\alpha}$ equals the base times the height.

The facet $F_\alpha$ receives particles from the volume $V_{i\alpha}$ when the velocity vector of the state is directed toward the facet, and transfers particles to the region when the velocity vector of the state is directed away from the facet. As will be discussed below, this relationship is modified when another facet occupies a portion of the parallelepiped $G_{i\alpha}$, a condition that could occur in the vicinity of non-convex features of a surface such as interior corners.

The parallelepiped $G_{i\alpha}$ of a facet $F_\alpha$ may overlap portions or all of multiple voxels. The number of voxels or portions thereof is dependent on the size of the facet relative to the size of the voxels, the energy of the state, and the orientation of the facet relative to the lattice structure. The number of affected voxels increases with the size of the facet. Accordingly, the size of the facet, as noted above, is typically selected to be on the order of or smaller than the size of the voxels located near the facet.

The flux of particles for a given state that move between a voxel and a facet $F_\alpha$ equals the density of the particles of the state in the voxel multiplied by the volume of the region of overlap with the voxel.

When the parallelepiped $G_{i\alpha}$ is intersected by one or more facets, the volume of the parallelepiped $V_{i\alpha}$ is equal to the summation of the volumes associated with each of the voxels overlapped by $G_{i\alpha}$ and the summation of the volumes associated with all of the facets that intersect $G_{i\alpha}$.

## D. Perform Simulation

Once the voxels that are affected by one or more facets are identified (274), a timer is initialized to begin the simulation (276). During each time increment of the simulation, movement of particles from voxel to voxel is simulated by an advection stage (278-286) that accounts for interactions of the particles with surface facets. Next, a collision stage (288) simulates the interaction of particles within each voxel. Thereafter, the timer is incremented (290). If the incremented timer does not indicate that the simulation is complete (292), the advection and collision stages (278-288) are repeated. If the incremented timer indicates that the simulation is complete (292), results of the simulation are stored and/or displayed (294).

1. Boundary Conditions For Surface

To correctly simulate interactions with a surface, each facet meets four boundary conditions. First, the combined mass of particles received by a facet equals the combined mass of particles transferred by the facet (i.e., the net mass flux to the facet equals zero). Second, the combined energy of particles received by a facet equals the combined energy of particles transferred by the facet (i.e., the net energy flux to the facet equals zero). These two conditions may be satisfied by requiring the net mass flux at each energy level (i.e., energy levels one and two) to equal zero.

The other two boundary conditions are related to the net momentum of particles interacting with a facet. For a surface with no skin friction, referred to herein as a slip surface, the net tangential momentum flux equals zero and the net normal momentum flux equals the local pressure at the facet. Thus, the components of the combined, received, and transferred momentums that are perpendicular to the normal $n_\alpha$ of the facet (i.e., the tangential components) are equal, while the difference between the components of the combined, received, and transferred momentums that are parallel to the normal $n_\alpha$ of the facet (i.e., the normal components) equals the local pressure at the facet. For non-slip surfaces, friction of the surface reduces the combined tangential momentum of particles transferred by the facet relative to the combined tangential momentum of particles received by the facet by a factor that is related to the amount of friction.

2. Gather From Voxels to Facets

Simulating interaction between particles and a surface, particles are gathered from the voxels and provided to the facets (278). As noted above, the flux of particles between a voxel and a facet for a given state is related to the overlap of the parallelepiped of the facet and the voxel for the given state. Only voxels for which parallelepiped has a non-zero value are summed. As noted above, the size of the facets is selected so that the parallelepiped volumes for the facets have a non-zero value for only a small number of voxels. The volume of the parallelepipeds and the flux of particles can have non-integer values, and thus a data processing system stores and processes these quantities as real numbers.

3. Move From Facet to Facet

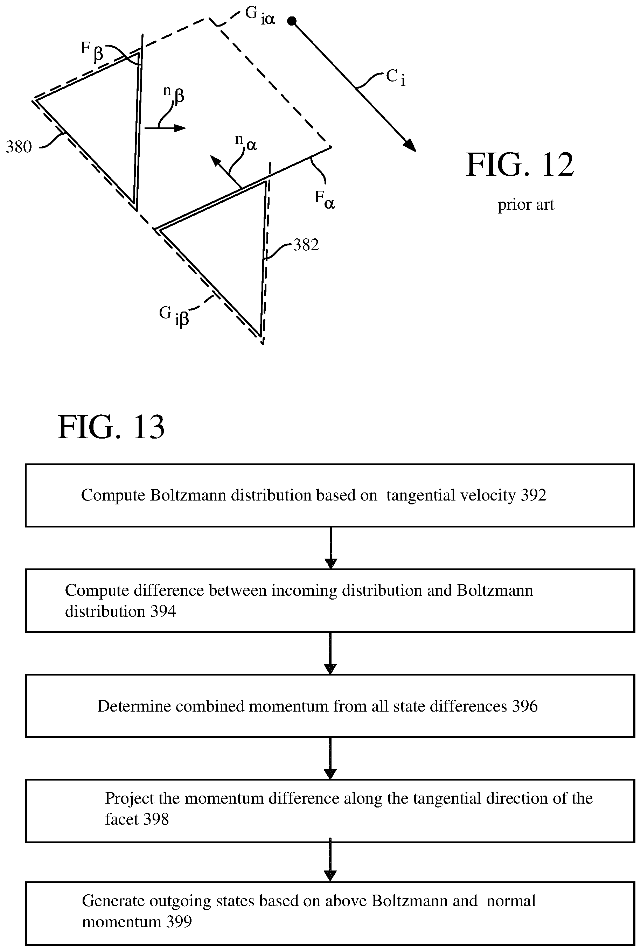

Next, particles are moved between facets (280). If the parallelepiped $G_{i\alpha}$ for an incoming state of a facet $F_\alpha$ is intersected by another facet $F_\beta$, then a portion of the particles for the incoming state received by the facet $F_\alpha$ will come from the facet $F_\beta$. In particular, facet $F_\alpha$ will receive a portion of the particles for the given state produced by facet $F_\beta$ during the previous time increment. This relationship is illustrated in FIG. 12, where a portion 380 of the parallelepiped $G_{i\alpha}$ that is intersected by facet $F_\beta$ equals a portion 382 of the parallelepiped $G_{i\beta}$ that is intersected by facet $F_\alpha$. For each state directed toward a facet $F_\alpha$, the number of particles provided to the facet $F_\alpha$ by the other facets is equal to the flux of particles from the other facets from the previous time step multiplied by the ratio of the overlapping volume between parallelepipeds of the other facets and the facet $F_\alpha$ for a given state and the total volume of the parallelepiped for the facet $F_\alpha$ for that state.

The total flux of particles for the given state into the facet $F_\alpha$ is equal to the sum of the particles from all of the voxels overlapping the parallelepipeds of the facet and the sum of the fluxes from all of the facets that have parallelepiped volumes overlapping with the parallelepiped volumes of the facet $F_\alpha$. The state vector for the facet, also referred to as a facet distribution function, has a number of entries corresponding to the number of entries of the voxels' state vectors, where the number of entries is the number of discrete lattice speeds in the LBM. The input states of the facet distribution function are set equal to the flux of particles into those states divided by the volume $V_{i\alpha}$.

The facet distribution function is a simulation tool for generating the output flux from a facet and is not necessarily representative of actual particles. To generate an accurate output flux, values are assigned to the other states of the distribution function. Outward states are populated using the technique described above for populating the inward states. In an alternative approach, the flux from states other than incoming states may be generated using values of the outward flux from the previous time step.

For parallel states (e.g., states with velocities parallel to the facet), the volume of the associated parallelepiped is zero. The facet distribution function for parallel states is determined as the limit of the facet distribution function as the volume of the parallelepiped and any overlapping parallelepipeds approach zero. The values of states having zero velocity (i.e., rest states and states (0, 0, 0, 2) and (0, 0, 0, -2)) are initialized at the beginning of the simulation based on initial conditions for temperature and pressure. These values are then adjusted over time.

4. Perform Facet Surface Dynamics

Next, surface dynamics are performed 282 for each facet to satisfy the boundary conditions. A procedure 390 for performing surface dynamics for a facet is illustrated in FIG. 13.

The velocity and densities are sampled from the voxel to the facet $F_\alpha$, during the gather step 278 (FIG. 5). The velocity is then projected along the surface. The Boltzmann Equilibrium distribution is computed (392) based on the sampled density and projected velocity, and the density and velocity are scaled to satisfy the constraints. The resulting density and velocity are then used to compute the new Boltzmann Equilibrium distribution (392). The difference between the incoming distribution and the new Boltzmann distribution are determined (394), and the combined momentum difference between all incoming states and the facet's corresponding Boltzmann distribution (396) are computed.

The momentum difference is projected along the tangential direction of the facet (398). From the momentum difference and the Boltzmann distribution, the outgoing flux for the facet is computed to satisfy the perfect slip boundary condition (399), by satisfying zero tangential flux.

To account for skin friction and other factors, the outgoing flux distribution can be augmented with a skin friction component based on a product of the skin friction coefficient of the surface and a difference of the equilibrium portions of the outgoing and incoming particle fluxes. A more detailed description of applying skin friction and correction to different energy levels of a lattice required for perfect mass and energy conservations are presented in the '260 patent and the '391 patent.

5. Move From Voxels to Voxels

Referring again to FIG. 5, particles are moved between voxels along the three-dimensional rectilinear lattice (284). This voxel to voxel movement is the only movement operation performed on voxels that do not interact with the facets (i.e., voxels that are not located near a surface). In typical simulations, voxels that are not located near enough to a surface to interact with the surface constitute a large majority of the voxels.

Each of the separate states represents particles moving along the lattice with integer speeds in each of the three dimensions: $x$, $y$, and $z$. The integer speeds include: 0, $\pm 1$, and $\pm 2$. The sign of the speed indicates the direction in which a particle is moving along the corresponding axis.

For voxels that do not interact with a surface, the move operation is computationally quite simple. The entire population of a state is moved from its current voxel to its destination voxel during every time increment. At the same time, the particles of the destination voxel are moved from that voxel to their own destination voxels. For example, an energy level 1 particle that is moving in the $+1x$ and $+1y$ direction $(1, 0, 0)$ is moved from its current voxel to one that is $+1$ over in the $x$ direction and 0 for other direction. The particle ends up at its destination voxel with the same state it had before the move $(1,0,0)$. Interactions within the voxel will likely change the particle count for that state based on local interactions with other particles and surfaces. If not, the particle will continue to move along the lattice at the same speed and direction.

The move operation becomes slightly more complicated for voxels that interact with one or more surfaces. This can result in one or more fractional particles being transferred to a facet. Transfer of such fractional particles to a facet results in fractional particles remaining in the voxels. These fractional particles are transferred to a voxel occupied by the facet.

Referring to FIG. 11, when a portion 360 of the particles of a given state for a voxel 362 is moved to a facet 364 (278), the remaining portion 366 is moved to a voxel 368 in which the facet 364 is located and from which particles of the state are directed to the facet 364. Thus, if the state population equaled 25 and the volume of the parallelepiped overlapped with the voxel equaled 0.25 (i.e., a quarter of the voxel intersects the parallelepiped), then 6.25 particles would be moved to the facet 364 and 18.75 particles would be moved to the voxel 368 occupied by the facet 364. Because multiple facets could intersect a single voxel, the number of particles of a given state transferred to a voxel occupied by one or more facets is related to the fraction of the volume of the voxel not overlapped by parallelepipeds of the intersecting facets (e.g., the number of particles transferred to the voxel equals the total number of incoming particles from the source voxel multiplied by the fraction of the voxel not overlapped by parallelepipeds of the intersecting facets).

6. Scatter From Facets to Voxels

Next, the outgoing particles from each facet are scattered to the voxels (286). Essentially, this scatter is the reverse of the gather by which particles were moved from the voxels to the facets. The number of particles of a given state that move from a facet to a voxel is proportional to the outgoing flux of particles from the facet multiplied by the ratio of the parallelepiped volume overlapping the voxel to the total parallelepiped volume. A proportionality factor accounting for the volume reduction of partial voxels can also be included. For each state, the total number of particles directed from the facets to a voxel is determined based on the sum of the particles moving from each facet to that voxel.

After scattering particles from the facets to the voxels, combining them with particles that have advected in from surrounding voxels, and integerizing the result, it is possible that certain directions in certain voxels may either underflow (become negative) or overflow (e.g., exceed 255 in an eight-bit implementation). This would result in either a gain or loss in mass, momentum and energy after these quantities are truncated to fit in the allowed range of values. To protect against such occurrences, the mass, momentum and energy that are out of bounds are accumulated prior to truncation of the offending state. For the energy to which the state belongs, an amount of mass equal to the value gained (due to underflow) or lost (due to overflow) is added back to randomly (or sequentially) selected states having the same energy and that are not themselves subject to overflow or underflow. The additional momentum resulting from this addition of mass and energy is accumulated and added to the momentum from the truncation. By only adding mass to the same energy states, both mass and energy are corrected when the mass counter reaches zero. Finally, the momentum is corrected using pushing/pulling techniques until the momentum accumulator is returned to zero.

7. Perform Fluid Dynamics

Fluid dynamics are performed 288 (FIG. 5). This may be referred to as microdynamics or intravoxel operations. Similarly, the advection procedure may be referred to as intervoxel operations. The microdynamics operations described below may also be used to collide particles at a facet to produce a Boltzmann distribution.

The fluid dynamics is ensured in the Lattice Boltzmann equation models by a particular collision operator known as the BGK collision model. This collision model mimics the dynamics of the distribution in a real fluid system. After the advection step, the conserved quantities of a fluid system, specifically the density, momentum and the energy are obtained from the distribution function. From these quantities, the equilibrium distribution function can be fully specified. The choice of the velocity vector set and the weights, together with the Lattice Boltzmann equation ensures that the macroscopic behavior obeys the correct hydrodynamic equation.

**Variable Resolution**

Variable resolution (as discussed in U.S. Patent 10,360,324, which is hereby incorporated in its entirety) can also be employed and would use voxels of different sizes, e.g., coarse voxels and fine voxels, for different regions of the mesh according to regions of interest. For example, regions of interest can include fine voxels to resolve fluid dynamics at smaller scales and with higher resolution. Outside regions of interest, coarse voxels can be used in the mesh to reduce the number of computations without reducing the accuracy of the fluid flow simulation in the regions of interest. During a simulation of a physical process, particles may be advected between the regions having different resolutions.

**Examples**

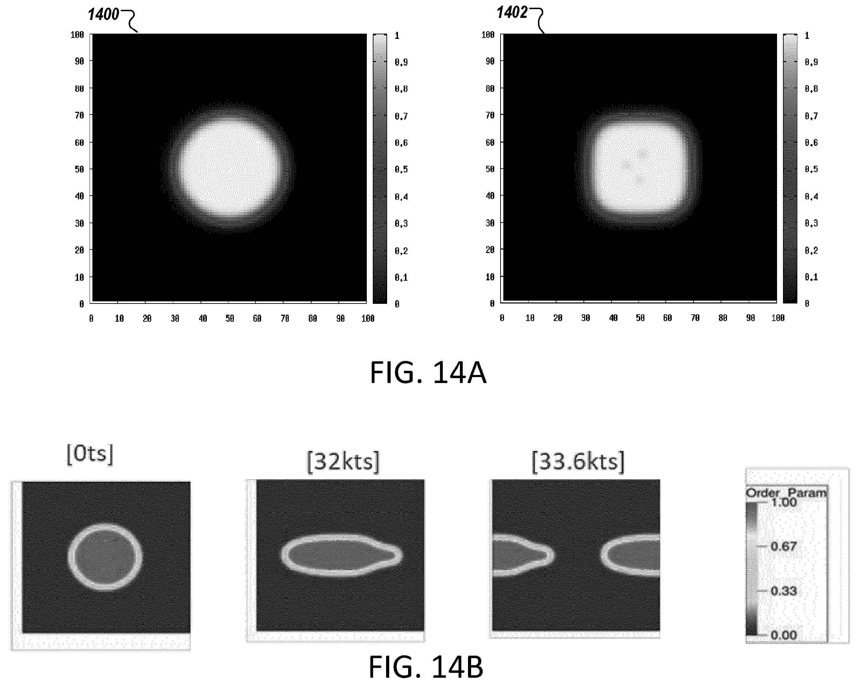

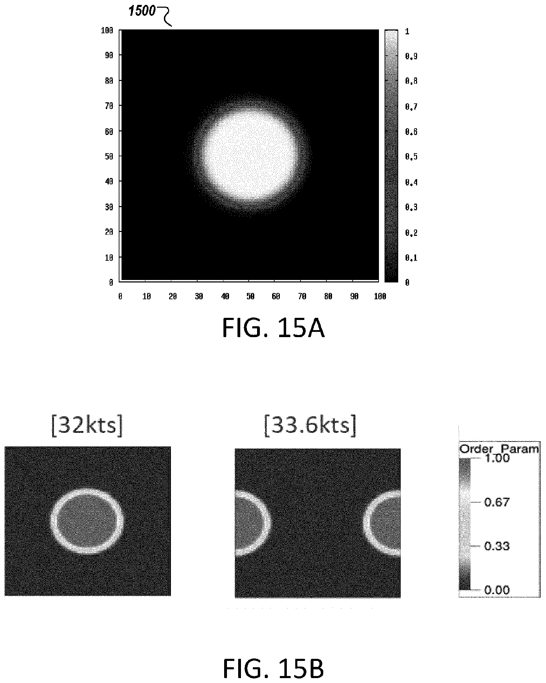

FIGS. 14A-15B show visualizations of simulation results for two test cases. The first case (FIGS. 14A and 15A) is a static droplet in free space with an initial pressure of 1.0 and 0.0 in the lattice unit (LU) everywhere. The second case (FIGS. 14B and 15B) is a dynamic droplet in free space realized with periodic boundaries. Since the initial $x$ velocity is set to 0.025 LU everywhere, a Galilean invariant simulation would show no effect on the droplet shape. The density ratio has been set to 1000 in both of the first and second cases.

FIGS. 14A and 14B show results from simulations conducted without removing the undesirable truncation error terms. Consequently, the simulations are not Galilean invariant and have an absolute pressure dependence. Referring to FIG. 14A, in contrast to the simulation results 1400 where the initial pressure is 0, when the initial pressure is 1.0 LU everywhere, the simulation results 1402 show that the circular droplet changes shape. This illustrates the absolute-pressure value dependence on the interface dynamics. FIG. 14B shows density profiles in the dynamic droplet case with initial $x$ velocity of 0.025 everywhere at 0 timestep, 32k timesteps and 33.6k timesteps. The shading indicates the order parameter corresponding to the fluid density. Here, the droplet shape should remain unchanged; however, its shape becomes distorted over time illustrating the broken Galilean invariance.

By applying the systems and method of the present disclosure, the problems in the static droplet and dynamic droplet shown in FIGS. 14A and 14B are improved as shown in FIGS. 15A and 15B. Referring to FIG. 15A, the simulation results 1500 show the density profiles of the static drop with the initial pressure of 1.0 everywhere. As expected, and reflecting the physical reality, the droplet maintains its circular shape. Referring to FIG. 15B, the simulation results yield visualizations of density profiles in the dynamic droplet case with initial $x$ velocity of 0.025 everywhere at 32k timesteps and 33.6k timesteps. Again, as expected for a Galilean invariant simulation, the simulation results show no deformation of the droplet shape.

According to the LBMs for solving the flow of pseudo-incompressible fluids, the approach described herein provides a proper way to define the zeroth and first moments of the distribution function for improving the Galilean invariance and absolute pressure-value dependence. The zeroth moment of the distribution function is defined to be proportional to the pressure without the local density dependence in the leading order. The first moment of the distribution function is defined to be proportional to the velocity without the local density dependence in the leading order.

The simulation of multiphase flow with high density ratio using the lattice Boltzmann method is still very challenging in practice. The systems and methods of the present disclosure include both Galilean invariance and independence of absolute pressure values for more accurately representing the flow dynamics of incompressible fluids in digital simulations using LBM solvers.

Embodiments of the subject matter and the functional operations described in this specification can be implemented in digital electronic circuitry, tangibly embodied computer software or firmware, computer hardware (including the structures disclosed in this specification and their structural equivalents), or in combinations of one or more of them. Embodiments of the subject matter described in this specification can be implemented as one or more computer programs (i.e., one or more modules of computer program instructions encoded on a tangible non-transitory program carrier for execution by, or to control the operation of, data processing apparatus) generated and executed to perform the techniques described herein, including, e.g., the features of FIGS. 2, 5, and 13. The computer storage medium can be a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example, a programmable processor, a computer, or multiple processors or computers. The apparatus can also be or further include special purpose logic circuitry (e.g., an FPGA (field programmable gate array) or an ASIC (application-specific integrated circuit)). In addition to hardware, the apparatus can optionally include code that produces an execution environment for computer programs (e.g., code that constitutes processor firmware, a protocol stack, a database management system, an operating system, or a combination of one or more of them).

A computer program, which can also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or another unit suitable for use in a computing environment. A computer program may, but need not, correspond to a file in a file system. A program can be stored in a portion of a file that holds other programs or data (e.g., one or more scripts stored in a markup language document, in a single file dedicated to the program in question, or in multiple coordinated files (e.g., files that store one or more modules, subprograms, or portions of code)). A computer program can be deployed so that the program is executed on one computer or on multiple computers that are located at one site or distributed across multiple sites and interconnected by a data communication network.

Computers suitable for the execution of a computer program can be based on general or special purpose microprocessors or both, or any other kind of central processing unit. Computer-readable media suitable for storing computer program instructions and data include all forms of non-volatile memory on media and memory devices, including by way of example semiconductor memory devices (e.g., EPROM, EEPROM, and flash memory devices), magnetic disks (e.g., internal hard disks or removable disks), magneto-optical disks, and CD-ROM and DVD-ROM disks. The processor and the memory can be supplemented by, or incorporated in, special purpose logic circuitry.

Embodiments of the subject matter described in this specification can be implemented in a computing system that includes a back-end component (e.g., as a data server), or that includes a middleware component (e.g., an application server), or that includes a front-end component (e.g., a client computer having a graphical user interface or a web browser through which a user can interact with an implementation of the subject matter described in this specification), or any combination of one or more such back-end, middleware, or front-end components. The components of the system can be interconnected by any form or medium of digital data communication (e.g., a communication network). Examples of communication networks include a local area network (LAN) and a wide area network (WAN) (e.g., the Internet).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a user device (e.g., for purposes of displaying data to and receiving user input from a user interacting with the user device), which acts as a client. Data generated at the user device (e.g., a result of the user interaction) can be received from the user device at the server.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing can be advantageous.

## EMBODIMENTS

Although the present invention is defined in the claims, it should be understood that the present invention can also (alternatively) be defined in accordance with the following embodiments:

1. A computer system for digitally simulating a fluid flow in a three-dimensional computer-aided design (CAD) model of a simulation space, the computer system comprising:

one or more processors; and
a memory including:

a mesh preparation engine for generating and storing a digital representation of a simulation space based on a digital three-dimensional CAD model, the digital representation including a mesh comprising a plurality of voxels; and
a simulation engine for reading, from the mesh preparation engine, the digital representation of the mesh in the simulation space,
with the simulation engine for storing instructions for digitally simulating a fluid flow, the instructions, when executed by the one or more processors, cause the one or more processors to perform operations comprising:

reading, from the mesh preparation engine, the digital representation of the mesh in the simulation space;
digitally simulating movement of one or more digital particles representing the fluid from one or more first voxels to one or more second voxels in the digital representation of the mesh, wherein the one or more digital particles are associated with an energy state and a lattice velocity;
performing one or more interaction operations on the one or more digital particles at the one or more second voxels to determine a distribution of the one or more digital particles;
wherein a first quantity represented by the distribution of the one or more digital particles at the one or more second voxels is based on a temperature and a pressure at the one or more second voxels and a reference fluid density; and
wherein a second quantity represented by the distribution of the one or more digital particles is based on the reference fluid density, velocities of the one or more digital particles, and a mean fluid velocity.

2. The system of embodiment 1, wherein the first quantity is represented by a zeroth moment of the distribution of the one or more digital particles, and wherein the zeroth moment is proportional to the pressure without a local density dependence.

3. The system of embodiment 1, wherein the second quantity is represented by a first moment of the distribution of the one or more digital particles, and wherein the first moment is proportional to the mean fluid velocity without a local density dependence.

4. The system of embodiment 1, wherein the first quantity and the second quantity improve an accuracy of the digitally simulating the fluid flow by reducing truncation error by improving Galilean invariance of the digital simulation relative to a simulation that does not include a reference fluid density in the first quantity and the second quantity.

5. The system of embodiment 1, wherein the fluid flow is a multi-phase fluid flow with a high density ratio between phases of the fluid flow.

6. The system of embodiment 1, wherein the instructions further comprise:
storing in the memory results of the digital simulation of the fluid flow, the digital simulation being based on digitally simulating movement of the one or more digital particles from one or more first voxels to one or more second voxels in the digital representation of the mesh and performing interaction operations on the one or more digital particles at the one or more second voxels to determine the distribution of the one or more digital particles.

7. The system of embodiment 1, wherein the digitally simulating the fluid flow using the first quantity improves independence from an absolute pressure value of the fluid flow relative to a digital simulation using a first quantity that is not based on a pressure and a reference fluid density.

8. A method for digitally simulating a fluid flow in a three-dimensional computer-aided design (CAD) model of a simulation space, the method comprising:

reading, by a data processing system, a digital representation of a simulation space based on a digital three-dimensional CAD model, the digital representation comprising a mesh comprising a plurality of voxels;
digitally simulating, by the data processing system, movement of one or more digital particles representing the fluid from one or more first voxels to one or more second voxels in the digital representation of the mesh, wherein the one or more digital particles are associated with an energy state and a lattice velocity;

performing, by the data processing system, one or more interaction operations on the one or more digital particles at the one or more second voxels to determine a distribution of the one or more digital particles;

wherein a first quantity represented by the distribution of the one or more digital particles at the one or more second voxels is based on a temperature and a pressure at the one or more second voxels and a reference fluid density; and

wherein a second quantity represented by the distribution of the one or more digital particles is based on the reference fluid density, velocities of the one or more digital particles, and a mean fluid velocity.

9. The method of embodiment 8, wherein the first quantity is represented by a zeroth moment of the distribution of the one or more digital particles, and wherein the zeroth moment is proportional to the pressure without a local density dependence.

10. The method of embodiment 8, wherein the second quantity is represented by a first moment of the distribution of the one or more digital particles, and wherein the first moment is proportional to the mean fluid velocity without a local density dependence.

11. The method of embodiment 8, wherein the first quantity and the second quantity improve an accuracy of the digitally simulating the fluid flow by reducing truncation error by improving Galilean invariance of the digital simulation relative to a simulation that does not include a reference fluid density in the first quantity and the second quantity.

12. The method of embodiment 8, wherein the fluid flow is a multi-phase fluid flow with a high density ratio between phases of the fluid flow.

13. The method of embodiment 8, further comprising:
storing, by the data processing system, in a hardware storage device results of the digital simulation of the fluid flow, the digital simulation being based on digitally simulating movement of the one or more digital particles from one or more first voxels to one or more second voxels in the digital representation of the mesh and performing interaction operations on the one or more digital particles at the one or more second voxels to determine the distribution of the one or more digital particles.

14. The method of embodiment 8, wherein the digitally simulating the fluid flow using the first quantity improves independence from an absolute pressure value of the fluid flow relative to a digital simulation using a first quantity that is not based on a pressure and a reference fluid density.

15. One or more non-transitory machine-readable storage devices storing instructions for digitally simulating a fluid flow in a three-dimensional computer-aided design (CAD) model of a simulation space, the instructions being executable by one or more processors, to cause performance of operations comprising:

reading a digital representation of a simulation space based on a digital three-dimensional CAD model, the digital representation comprising a mesh comprising a plurality of voxels;

digitally simulating movement of one or more digital particles representing the fluid from one or more first voxels to one or more second voxels in the digital representation of the mesh, wherein the one or more digital particles are associated with an energy state and a lattice velocity;

performing one or more interaction operations on the one or more digital particles at the one or more second voxels to determine a distribution of the one or more digital particles;

wherein a first quantity represented by the distribution of the one or more digital particles at the one or more second voxels is based on a temperature and a pressure at the one or more second voxels and a reference fluid density; and

wherein a second quantity represented by the distribution of the one or more digital particles is based on the reference fluid density, velocities of the one or more digital particles, and a mean fluid velocity.

16. The one or more non-transitory machine-readable storage devices of embodiment 15, wherein the first quantity is represented by a zeroth moment of the distribution of the one or more digital particles, and wherein the zeroth moment is proportional to the pressure without a local density dependence.

17. The one or more non-transitory machine-readable storage devices of embodiment 15, wherein the second quantity is represented by a first moment of the distribution of the one or more digital particles, and wherein the first moment is proportional to the mean fluid velocity without a local density dependence.

18. The one or more non-transitory machine-readable storage devices of embodiment 15, wherein the fluid flow is a multi-phase fluid flow with a high density ratio between phases of the fluid flow.

19. The one or more non-transitory machine-readable storage devices of embodiment 15, wherein the instructions further comprise:
storing in a hardware storage device results of the digital simulation of the fluid flow, the digital simulation being based on digitally simulating movement of the one or more digital particles from one or more first voxels to one or more second voxels in the digital representation of the mesh and performing interaction operations on the one or more digital particles at the one or more second voxels to determine the distribution of the one or more digital particles.

20. The one or more non-transitory machine-readable storage devices of embodiment 15, wherein the digitally simulating the fluid flow using the first quantity improves independence from an absolute pressure value of the fluid flow relative to a digital simulation using a first quantity that is not based on a pressure and a reference fluid density, and wherein the first quantity and the second quantity improve an accuracy of the digitally simulating the fluid flow by reducing truncation error by improving Galilean invariance of the digital simulation relative to a simulation that does not include a reference fluid density in the first quantity and the second quantity.

**Claims**

1. A computer system for digitally simulating a fluid flow in a three-dimensional computer-aided design (CAD) model of a simulation space, the computer system comprising:

   one or more processors; and
   a memory including:

      a mesh preparation engine for generating and storing a digital representation of a simulation space based on a digital three-dimensional CAD model, the digital representation including a mesh comprising a plurality of voxels; and
      a simulation engine for reading, from the mesh preparation engine, the digital representation of the mesh in the simulation space,
      with the simulation engine for storing instructions for digitally simulating a fluid flow, the instructions, when executed by the one or more processors, cause the one or more processors to perform operations comprising:

         reading, from the mesh preparation engine, the digital representation of the mesh in the simulation space;
         digitally simulating movement of one or more digital particles representing the fluid from one or more first voxels to one or more second voxels in the digital representation of the mesh, wherein the one or more digital particles are associated with an energy state and a lattice velocity;
         performing one or more interaction operations on the one or more digital particles at the one or more second voxels to determine a distribution of the one or more digital particles;
         wherein a first quantity represented by the distribution of the one or more digital particles at the one or more second voxels is based on a temperature and a pressure at the one or more second voxels and a reference fluid density; and
         wherein a second quantity represented by the distribution of the one or more digital particles is based on the reference fluid density, velocities of the one or more digital particles, and a mean fluid velocity.

2. The system of claim 1, wherein the first quantity is represented by a zeroth moment of the distribution of the one or more digital particles, and wherein the zeroth moment is proportional to the pressure without a local density dependence.

3. The system of claim 1, wherein the second quantity is represented by a first moment of the distribution of the one or more digital particles, and wherein the first moment is proportional to the mean fluid velocity without a local density dependence.

4. The system of claim 1, wherein the first quantity and the second quantity improve an accuracy of the digitally simulating the fluid flow by reducing truncation error by improving Galilean invariance of the digital simulation relative to a simulation that does not include a reference fluid density in the first quantity and the second quantity.

5. The system of claim 1, wherein the fluid flow is a multi-phase fluid flow with a high density ratio between phases of the fluid flow.

6. The system of claim 1, wherein the instructions further comprise:
storing in the memory results of the digital simulation of the fluid flow, the digital simulation being based on digitally simulating movement of the one or more digital particles from one or more first voxels to one or more second voxels in the digital representation of the mesh and performing interaction operations on the one or more digital particles at the one or more second voxels to determine the distribution of the one or more digital particles.

7. The system of claim 1, wherein the digitally simulating the fluid flow using the first quantity improves independence from an absolute pressure value of the fluid flow relative to a digital simulation using a first quantity that is not based on a pressure and a reference fluid density.

8. A method for digitally simulating a fluid flow in a three-dimensional computer-aided design (CAD) model of a simulation space, the method comprising:

reading, by a data processing system, a digital representation of a simulation space based on a digital three-dimensional CAD model, the digital representation comprising a mesh comprising a plurality of voxels;
digitally simulating, by the data processing system, movement of one or more digital particles representing the fluid from one or more first voxels to one or more second voxels in the digital representation of the mesh, wherein the one or more digital particles are associated with an energy state and a lattice velocity;
performing, by the data processing system, one or more interaction operations on the one or more digital particles at the one or more second voxels to determine a distribution of the one or more digital particles;
wherein a first quantity represented by the distribution of the one or more digital particles at the one or more second voxels is based on a temperature and a pressure at the one or more second voxels and a reference fluid density; and
wherein a second quantity represented by the distribution of the one or more digital particles is based on the reference fluid density, velocities of the one or more digital particles, and a mean fluid velocity.

9. The method of claim 8, wherein the first quantity is represented by a zeroth moment of the distribution of the one or more digital particles, and wherein the zeroth moment is proportional to the pressure without a local density dependence.

10. The method of claim 8, wherein the second quantity is represented by a first moment of the distribution of the one or more digital particles, and wherein the first moment is proportional to the mean fluid velocity without a local density dependence.

11. The method of claim 8, wherein the first quantity and the second quantity improve an accuracy of the digitally simulating the fluid flow by reducing truncation error by improving Galilean invariance of the digital simulation relative to a simulation that does not include a reference fluid density in the first quantity and the second quantity.

12. The method of claim 8, wherein the fluid flow is a multi-phase fluid flow with a high density ratio between phases of the fluid flow.

13. The method of claim 8, further comprising:
storing, by the data processing system, in a hardware storage device results of the digital simulation of the fluid flow, the digital simulation being based on digitally simulating movement of the one or more digital particles from one or more first voxels to one or more second voxels in the digital representation of the mesh and performing interaction operations on the one or more digital particles at the one or more second voxels to determine the distribution of the one or more digital particles.

14. The method of claim 8, wherein the digitally simulating the fluid flow using the first quantity improves independence from an absolute pressure value of the fluid flow relative to a digital simulation using a first quantity that is not based on a pressure and a reference fluid density.

15. One or more non-transitory machine-readable storage devices storing instructions for digitally simulating a fluid flow in a three-dimensional computer-aided design (CAD) model of a simulation space, the instructions being executable by one or more processors, to cause performance of operations comprising the method of any one of claims 8 to 14.

FIG. 1

40

Retrieve/receive an auto generated mesh for a physical object being simulated based on corrected CAD drawings, 42

Precompute geometric quantities from the mesh 44

Perform dynamic Lattice Boltzmann Model simulation using mesh 46

FIG. 2

FIG. 3

prior art

FIG. 4

prior art

272 — Model Simulation Space with Corrected CAD Drawings

270

274 — Identify Voxels Affected by Facets

276 — Time = 1

278 — Gather from Voxels to Facets

280 — Move from Facets to Facets

282 — Perform Facet Surface Dynamics see FIG. 13

284 — Move from Voxels to Voxels

284 — Move from Voxels to Voxels

286 — Scatter from Facets to Voxels

288 — Perform Fluid Dynamics

290 — Time = Time + 1

292 — Complete?

No

294 — Store and/or Display Results

Yes

FIG. 5

FIG. 6

prior art

FIG. 7A

prior art

FIG. 7B

prior art

320

324 322 326

## FIG. 8
prior art

344 340 342 346

344

## FIG. 9
prior art

FIG. 10
prior art

FIG. 11
prior art

FIG. 12

prior art

FIG. 13

Compute Boltzmann distribution based on tangential velocity 392

Compute difference between incoming distribution and Boltzmann distribution 394

Determine combined momentum from all state differences 396

Project the momentum difference along the tangential direction of the facet 398

Generate outgoing states based on above Boltzmann and normal momentum 399

FIG. 14A

FIG. 14B

EP 4 675 489 A1

EP 4 675 489 A1

1500

FIG. 15A

[32kts]    [33.6kts]

Order_Param
1.00

0.67

0.33

0.00

FIG. 15B

**EUROPEAN SEARCH REPORT**

Application Number

EP 25 18 6707

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/133374 A1 (GOPALAKRISHNAN PRADEEP [US] ET AL) 6 May 2021 (2021-05-06) <br> * abstract * <br> * paragraph [0027] * <br> * paragraph [0054] - paragraph [0058] * <br> * paragraph [0088] * <br> * paragraph [0097] - paragraph [0134] * <br> * claim 1 * <br> ----- | 1-15 | INV. <br> G06F30/25 <br> G06F30/28 <br><br> ADD. <br> G06F113/08 <br> G06F111/10 <br> G06F119/08 |
| X | EP 3 528 146 A1 (DASSAULT SYSTEMES SIMULIA CORP [US]) 21 August 2019 (2019-08-21) <br> * abstract * <br> * paragraph [0002] - paragraph [0025] * <br> * paragraph [0053] - paragraph [0074] * <br> ----- | 1-15 | |
| X | US 9 576 087 B2 (EXA CORPORTION [US]; EXA CORP [US]) 21 February 2017 (2017-02-21) <br> * abstract * <br> * column 2, line 4 - column 6, line 6 * <br> * column 16 * <br> ----- | 1-15 | |
| X | EP 3 680 801 A1 (DASSAULT SYSTEMES SIMULIA CORP [US]) 15 July 2020 (2020-07-15) <br> * abstract * <br> * paragraph [0003] - paragraph [0038] * <br> * paragraph [0064] - paragraph [0103] * <br> ----- | 1-15 | **TECHNICAL FIELDS SEARCHED (IPC)** <br><br> G06F |

The present search report has been drawn up for all claims

| Place of search | Date of completion of the search | Examiner |
|---|---|---|
| Munich | 17 November 2025 | Radev, Boyan |

EPO FORM 1503 03.82 (P04C01)

## ANNEX TO THE EUROPEAN SEARCH REPORT
## ON EUROPEAN PATENT APPLICATION NO.

EP 25 18 6707

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2025

| Patent document cited in search report | | | Publication date | Patent family member(s) | | Publication date |
|---|---|---|---|---|---|---|
| US 2021133374 | A1 | | 06-05-2021 | CN | 112749518 A | 04-05-2021 |
| | | | | EP | 3816842 A1 | 05-05-2021 |
| | | | | JP | 2021072123 A | 06-05-2021 |
| | | | | JP | 2025141967 A | 29-09-2025 |
| | | | | US | 2021133374 A1 | 06-05-2021 |
| | | | | US | 2025068797 A1 | 27-02-2025 |
| EP 3528146 | A1 | | 21-08-2019 | CN | 110175342 A | 27-08-2019 |
| | | | | EP | 3528146 A1 | 21-08-2019 |
| | | | | JP | 7296216 B2 | 22-06-2023 |
| | | | | JP | 2019215848 A | 19-12-2019 |
| | | | | US | 2019258764 A1 | 22-08-2019 |
| | | | | US | 2025005234 A1 | 02-01-2025 |
| US 9576087 | B2 | | 21-02-2017 | AU | 2014293027 A1 | 18-02-2016 |
| | | | | CA | 2919062 A1 | 29-01-2015 |
| | | | | CN | 105518681 A | 20-04-2016 |
| | | | | EP | 3025260 A1 | 01-06-2016 |
| | | | | EP | 3525120 A1 | 14-08-2019 |
| | | | | JP | 6561233 B2 | 21-08-2019 |
| | | | | JP | 2016534436 A | 04-11-2016 |
| | | | | US | 2015356217 A1 | 10-12-2015 |
| | | | | US | 2017124232 A1 | 04-05-2017 |
| | | | | US | 2020019662 A1 | 16-01-2020 |
| | | | | WO | 2015013507 A1 | 29-01-2015 |
| EP 3680801 | A1 | | 15-07-2020 | EP | 3680801 A1 | 15-07-2020 |
| | | | | US | 2020250362 A1 | 06-08-2020 |
| | | | | US | 2022188485 A1 | 16-06-2022 |

EPO FORM P0459

For more details about this annex : see Official Journal of the European Patent Office, No. 12/82

**REFERENCES CITED IN THE DESCRIPTION**

**Patent documents cited in the description**

- US 63667208
- US 5848260 A
- US 11847391 B
- US 10360324 B